# EUROPÄISCHE PATENTANMELDUNG

(11) **EP 4 277 212 A1**
(43) Veröffentlichungstag der Anmeldung: **15.11.2023**
(21) Anmeldenummer: 22172404.0
(22) Anmeldetag: 09.05.2022
(51) Int. Cl.: H04L 12/28

(54) **BETRIEBSVERFAHREN FÜR EINE SMARTHOME-PLATTFORM**

(71) Anmelder: Deutsche Telekom AG, 53113 Bonn (DE)
(72) Erfinder: MINOW, Jascha, 64625 Bensheim (DE); JAHN, Carl, 65191 Wiesbaden (DE); EL MALLOUKI, Said, 56329 St.Goar (DE)
(74) Vertreter: RDL Patentanwälte PartG mbB

(57) **Zusammenfassung**

Verfahren zum Betreiben einer Smarthome-Plattform, bei dem ein Sensor einer Smarthome-Plattform eine in einem die Smarthome-Plattform umfassenden Haus angeordnete Person erfasst und ein von der erfassten Person abhängiges Sensorsignal bereitstellt und ein Rechner der Smarthome-Plattform das bereitgestellte Sensorsignal empfängt und einen bestimmten Parameterwert einer mit dem Rechner funktional verbundenen Einrichtung des Hauses abhängig von dem empfangenen Sensorsignal automatisch einstellt, sowie Smarthome-Plattform für ein Haus.

## Beschreibung

Die Erfindung betrifft ein Verfahren zum Betreiben einer Smarthome-Plattform, bei dem ein Sensor einer Smarthome-Plattform eine in einem die Smarthome-Plattform umfassenden Haus angeordnete Person erfasst und ein von der erfassten Person abhängiges Sensorsignal bereitstellt und ein Rechner der Smarthome-Plattform das bereitgestellte Sensorsignal empfängt und einen bestimmten Parameterwert einer mit dem Rechner funktional verbundenen Einrichtung des Hauses abhängig von dem empfangenen Sensorsignal automatisch einstellt. Ferner betrifft die Erfindung eine Smarthome-Plattform für ein Haus.

Verfahren der eingangs genannten Art gehören in unterschiedlichen Ausgestaltungen zum Stand der Technik und dienen dazu, Einrichtungen eines Hauses automatisch zu steuern. Dazu umfasst das Haus eine Smarthome-Plattform, welche üblicherweise zumindest einen in dem Haus angeordneten Sensor und einen mit dem zumindest einen Sensor und den Einrichtungen funktional verbundenen Rechner umfasst. Die Smarthome-Plattform ermöglicht ein automatisches Einstellen von Parameterwerten der Einrichtungen.

Zwar kann eine Smarthome-Plattform die Einrichtungen des Hauses abhängig von in dem Haus angeordneten Personen steuern. Jedoch kann die Smarthome-Plattform beim Steuern der Einrichtungen keine individuellen Vorlieben der Personen berücksichtigen.

Es ist daher eine Aufgabe der Erfindung, ein Verfahren zum Betreiben einer Smarthome-Plattform vorzuschlagen, welches individuelle Vorlieben einer in dem Haus angeordneten Person berücksichtigt. Eine weitere Aufgabe der Erfindung besteht darin, eine Smarthome-Plattform für ein Haus bereitzustellen.

Ein Gegenstand der Erfindung ist ein Verfahren zum Betreiben einer Smarthome-Plattform, bei dem ein Sensor einer Smarthome-Plattform eine in einem die Smarthome-Plattform umfassenden Haus angeordnete Person erfasst und ein von der erfassten Person abhängiges Sensorsignal bereitstellt und ein Rechner der Smarthome-Plattform das bereitgestellte Sensorsignal empfängt und einen bestimmten Parameterwert einer mit dem Rechner funktional verbundenen Einrichtung des Hauses abhängig von dem empfangenen Sensorsignal automatisch einstellt. Die Einrichtung kann zu einem Regelkreis des Hauses gehören, beispielsweise als ein Raumluftthermostat ausgebildet sein, oder eine eigenständige Vorrichtung sein, beispielsweise eine Leuchte.

Erfindungsgemäß stellt ein RF-Sensor als der Sensor das Sensorsignal bereit, identifiziert der Rechner abhängig von dem empfangenen Sensorsignal die Person und stellt den bestimmten Parameterwert der Einrichtung abhängig von der identifizierten Person automatisch ein. Der RF (Radio Frequency)-Sensor emittiert eine Radiowelle und erfasst eine von der Person reflektierte Radiowelle.

Die emittierte und reflektierte Radiowelle weist bevorzugt eine Frequenz aus einem Frequenzbereich von 5,46 GHz bis 7,24 GHz auf. Radiowellen mit Frequenzen aus diesem Frequenzbereich werden nicht von Wänden eines Hauses, wohl aber von einer in dem Haus angeordneten Person, insbesondere von einem Skelett der Person, reflektiert.

Das von dem RF-Sensor bereitgestellte Sensorsignal korrespondiert zu einer Physiognomie, d.h. einer äußeren Gestalt, der Person. Der Rechner kann eine Physiognomie der erfassten Person ohne Weiteres erkennen. Da die Physiognomie eine individuelle Eigenschaft der Person ist, kann der Rechner die erfasste Person anhand der erkannten Physiognomie identifizieren. Die Physiognomie ermöglicht als ein eindeutiger Identifikator der Person ein Berücksichtigen von individuellen Vorlieben der Person.

In einer Ausführungsform speichert der Rechner ein der identifizierten Person zugeordnetes Personenprofil und bestimmt den Parameterwert mittels des gespeicherten Personenprofils. Das Personenprofil umfasst zumindest einen physiognomischen Identifikator der Person und ordnet dem physiognomischen Identifikator den von der Person bevorzugten Parameterwert zu. Das Bestimmen des Parameterwerts umfasst ein Zugreifen auf das Personenprofil mittels des physiognomischen Identifikators und ein Auslesen des Parameterwerts aus dem Personenprofil.

Der Rechner bestimmt bespielsweise eine Raumtemperatur, eine Wassertemperatur und/oder eine Lichtstärke, eine Farbe und/oder eine Farbtemperatur einer Leuchte als den Parameterwert der Einrichtung. Wenn die Einrichtung als ein Raumluftthermostat einer Raumheizung ausbildet ist, bestimmt der Rechner die Raumlufttemperatur als den Parameterwert und stellt das Raumluftthermostat auf die bestimmte Raumlufttemperatur ein. Wenn die Einrichtung als eine Mischbatterie einer Dusche ausgebildet ist, bestimmt der Rechner die Wassertemperatur als den Parameterwert und stellt die Mischbatterie auf die bestimmte Wassertemperatur ein. Wenn die Einrichtung als eine Leuchte ausgebildet ist, bestimmt der Rechner die Lichtstärke, d.h. eine Helligkeit, die Farbe und/oder die Farbtemperatur als den Parameterwert und stellt die Leuchte auf die bestimmte Lichtstärke, Farbe und/oder Farbtemperatur ein.

Der Rechner kann einen an der Person angebrachten und von dem RF-Sensor erfassbaren RF (Radio Frequency)-Reflektor erfassen und die Person anhand des erfassten RF-Reflektors identifizieren, in das Identifizieren einbeziehen oder aus dem Identifizieren ausschließen. Der RF-Reflektor kann als ein Unikat ausgeformt sein und unmittelbar ein Identifizieren der Person ermöglichen. Der RF-Reflektor kann als ein positiver Selektor (vgl. Whitelist) oder als ein negativer Selektor (vgl. Blacklist) ausgeformt sein.

Der RF-Reflektor kann an einem Kleidungsstück der Person oder als ein Accessoire, beispielsweise als ein Armband oder ein Halsumhänger, an einem Körperteil der Person angebracht sein.

Wenn der an der Person angebrachte RF-Reflektor als ein positiver Selektor ausgeformt ist, wird die Person von der Smarthome-Plattform berücksichtigt. Wenn der an der Person angebrachte RF-Reflektor als ein negativer Selektor ausgeformt ist, wird die Person von der Smarthome-Plattform ignoriert. Selbstverständlich kann ein als ein Unikat ausgebildeter RF-Reflektor zugleich als ein positiver Selektor ausformt sein, d.h. jede Person ohne einen RF-Reflektor wird ignoriert und jede Person mit einem RF-Reflektor wird einbezogen und zugleich identifiziert.

Bevorzugt ermittelt der Rechner abhängig von dem empfangenen Sensorsignal eine Körpergröße der Person und identifiziert der Rechner die Person anhand der ermittelten Körpergröße. Die Körpergröße ist ein aus dem physiognomischen Identifikator einfach ableitbare statische Kenngröße, welche mit einer in vielen Fällen ausreichenden Präzision ein Unterscheiden von mehreren in dem Haus angeordneten Personen erlaubt. Beispielsweise sind im Allgemeinen Kinder kleiner als Erwachsene, und im Durchschnitt Frauen kleiner als Männer, wodurch sich Mitglieder einer Familie in vielen Fällen gut unterscheiden lassen. Die Körpergröße gehört als ein Identifikator der Person zu dem Personenprofil.

Weiter bevorzugt ermittelt der Rechner abhängig von dem empfangenen Sensorsignal ein Bewegungsmuster der Person und identifiziert der Rechner die Person anhand des ermittelten Bewegungsmusters. Das Bewegungsmuster (GAIT) ist eine aus einem Zeitverlauf des physiognomischen Identifikators ableitbare dynamische Kenngröße, welche wegen der starken Individualität von Körperbewegungen eine hohe Präzision des Unterscheidens von mehreren in dem Haus angeordneten Personen gewährleistet. Das Bewegungsmuster gehört als ein Identifikator der Person zu dem Personenprofil.

Selbstverständlich kann die Smarthome-Plattform die Körpergröße und das Bewegungsmuster bei dem Identifizieren der Person kombinieren, was mit einer noch höheren Präzision des Unterscheidens einhergeht. Zum Vermeiden von Missverständnissen wird betont, dass ein RF-Reflektor für das erfindungsgemäße Verfahren nicht obligatorisch, sondern lediglich optional ist.

Vorteilhaft ermittelt der Rechner eine Position der identifizierten Person und stellt der Rechner den bestimmten Parameterwert der Einrichtung eines die ermittelte Position umfassenden Raumbereichs des Hauses ein. Der Raumbereich kann ein Zimmer des Hauses sein, beispielsweise ein Flur, ein Wohnzimmer, ein Esszimmer, ein Kinderzimmer, ein Arbeitszimmer, eine Küche, ein Badezimmer oder ein Kellerraum. Auf diese Weise wirkt die identifizierte Person als ein Positionssensor der Smarthome-Plattform und lokalisiert durch die Position die zu steuernde Einrichtung.

Günstigerweise kann der Rechner den Parameterwert der Einrichtung des Raumbereichs zurücksetzen, wenn die identifizierte Person den Raumbereich verlässt. Auf diese Weise ist der Parameterwert ausschließlich während einer Anwesenheit der Person in dem Raumbereich eingestellt. Wenn die Person in dem Raumbereich abwesend ist, kann der Rechner einen für einen unbenutzten Raumbereich vorbestimmten Parameterwert der Einrichtung einstellen.

In vielen Ausführungsformen erfasst der RF-Sensor eine Mehrzahl von in dem Haus angeordneten Personen und/oder identifiziert der Rechner eine Mehrzahl von Personen und/oder stellt der Rechner eine Mehrzahl von bestimmten Parameterwerten automatisch ein. Das Verfahren unterstützt ein Haus mit einer Mehrzahl von Einrichtungen, in dem eine Mehrzahl von Personen angeordnet sind und ist für alle praktisch relevanten Fälle geeignet.

Noch ein Gegenstand der Erfindung ist eine Smarthome-Plattform für ein Haus, welche einen Sensor und einen mit dem RF-Sensor funktional verbundenen Rechner umfasst. Derartige Smarthome-Plattformen für Häuser sind weit verbreitet. Entsprechend findet die Erfindung vielfältige Anwendungen.

Erfindungsgemäß ist der Sensor als ein RF-Sensor ausgebildet und ist die Smarthome-Plattform ausgebildet, ein Verfahren nach einer Ausführungsform der Erfindung auszuführen. Der RF-Sensor ermöglicht der Smarthome-Plattform ein Identifizieren einer in dem Haus angeordneten Person und ein Steuern eines Hauses unter Berücksichtigung von individuellen Vorlieben der Person.

Ein wesentlicher Vorteil des erfindungsgemäßen Verfahrens besteht darin, dass Parameterwerte von Einrichtungen eines Hauses unter Berücksichtigung individueller Vorlieben von in dem Haus angeordneten Personen eingestellt werden. Jede in dem Haus angeordnete Person kann als ein Positionssensor eine Smarthome-Plattform des Hauses erweitern, wodurch ein Nutzen der Smarthome-Plattform vergrößert ist, d.h. ein Potential der Smarthome-Plattform erschlossen ist.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

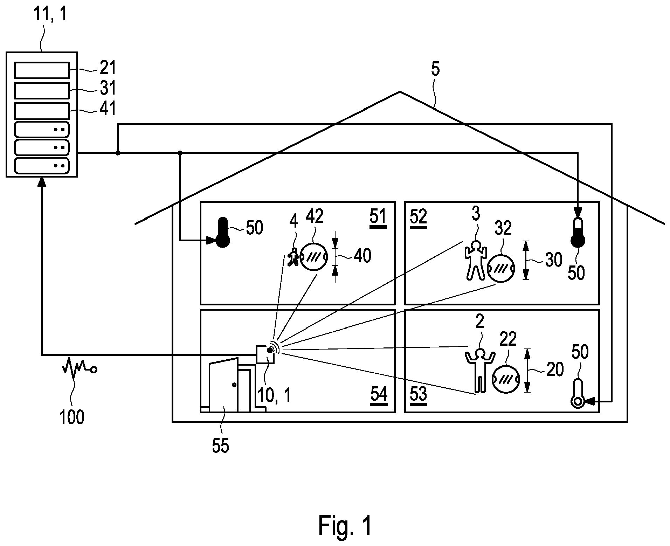

Die Erfindung ist anhand eines Ausführungsbeispiels in der Zeichnung schematisch dargestellt und wird im Folgenden unter Bezugnahme auf die Zeichnung ausführlich beschrieben. Es zeigt
- Fig. 1: eine Seitenansicht eines Hauses mit einer Smartphone-Plattform nach einer Ausführungsform der Erfindung.

Fig. 1 zeigt eine Seitenansicht eines Hauses 5 mit einer Smartphone-Plattform 1 nach einer Ausführungsform der Erfindung. Das Haus umfasst lediglich beispielhaft und nicht einschränkend eine Haustür 55, vier Raumbereiche 51, 52, 53, 54, welche jeweils als Kinderzimmer, Arbeitszimmer, Wohnzimmer und Flur bezeichnet werden können. Ferner umfasst das Haus drei Einrichtungen 50, welche wiederum lediglich beispielhaft und nicht einschränkend als Raumluftthermostate ausgebildet und in den Raumbereichen 51, 52 und 53 angeordnet sind. Die Raumluftthermostate sind jeweils mit nicht gezeigten und an sich bekannten Heizeinrichtungen funktional verbunden. Die Einrichtungen 50 können ebenso als Wassermischer oder Leuchten ausgebildet sein.

In dem Raumbereich 53 ist eine einer Mehrzahl von Personen 2, 3, 4 angeordnet, nämlich eine erste Person 2, beispielhaft ein Vater. In dem Raumbereich 52 ist eine zweite Person 3, beispielhaft eine Mutter, und in dem Raumbereich 51 ist eine dritte Person 4, beispielhaft ein Kind angeordnet. Die mehreren Personen 2, 3, 4 weisen jeweils Körpergrößen 20, 30 und 40 auf. An den mehreren Personen 2, 3, 4, genauer gesagt an Kleidungsstücken oder Körperteilen der jeweiligen Person 2, 3, 4, können jeweils von einem RF-Sensor 10 erfassbare RF-Reflektoren 22, 32, 42 angebracht sein.

Die Smarthome-Plattform 1 umfasst den in dem Haus 5, vorteilhaft nahe der Haustür 55, angeordneten RF-Sensor 10 und einen mit dem RF-Sensor 10 funktional verbundenen Rechner 11 mit Benutzerprofilen 21, 31, 41, welche Identifikatoren für die Personen 2, 3, 4 und Parameterwerte für die Einrichtungen 50 umfassen. Der Rechner 11 ist beabstandet zu dem Haus 5 angeordnet, beispielsweise in einer Internet-Cloud und mit dem RF-Sensor 10 und den Einrichtungen 50 über einen Datenkanal verbunden. Ein Mobilfunknetz oder ein Kabel kann den Datenkanal bereitstellen. Alternativ kann der Rechner 10 in dem Haus 5 angeordnet oder als ein verteiltes System teilweise beabstandet zu dem Haus 5 und teilweise in dem Haus 5 angeordnet sein.

Die Smarthome-Plattform 1 ist ausgebildet, zum Betreiben der Smarthome-Plattform 1 ein Verfahren nach einer Ausführungsform der Erfindung wie folgt auszuführen.

Der RF-Sensor 10 der Smarthome-Plattform 1 erfasst eine in dem die Smarthome-Plattform 1 umfassenden Haus 5 angeordnete Person 2, 3, 4 und stellt ein von der erfassten Person 2, 3, 4 abhängiges Sensorsignal 100 bereit.

Der mit dem RF-Sensor 10 funktional verbundene Rechner 11 der Smarthome-Plattform 1 empfängt das bereitgestellte Sensorsignal 100 und identifiziert abhängig von dem empfangenen Sensorsignal 100 die Person 2, 3, 4.

Der Rechner 11 stellt einen bestimmten Parameterwert einer Einrichtung 50 des Hauses 5 abhängig von der identifizierten Person 2, 3, 4 automatisch ein. Der Rechner 11 kann ein der identifizierten Person 2, 3, 4 zugeordnetes Personenprofil 21, 31, 41 speichern und den Parameterwert mittels des gespeicherten Personenprofils 21, 31, 41 bestimmen.

Der Rechner 11 kann eine Raumtemperatur, eine Wassertemperatur und/oder eine Lichtstärke, eine Farbe und/oder eine Farbtemperatur einer Leuchte als den Parameterwert der Einrichtung 50 bestimmen.

Der Rechner 11 kann den an der Person 2, 3, 4 angebrachten RF-Reflektor 22, 32, 42 erfassen und die Person 2, 3, 4 anhand des erfassten RF-Reflektors 22, 32, 42 identifizieren. Alternativ kann der Rechner 11 die Person 2, 3, 4 anhand des erfassten RF-Reflektors 22, 32, 42 in das Identifizieren einbeziehen oder aus dem Identifizieren ausschließen.

Bevorzugt ermittelt der Rechner 11 abhängig von dem empfangenen Sensorsignal 100 eine Körpergröße 20, 30, 40 der Person 2, 3, 4 und identifiziert der Rechner 11 die Person 2, 3, 4 anhand der ermittelten Körpergröße 20, 30, 40. Vorteilhaft ermittelt der Rechner 11 abhängig von dem empfangenen Sensorsignal 100 ein Bewegungsmuster der Person 2, 3, 4 und identifiziert die Person 2, 3, 4 anhand des ermittelten Bewegungsmusters.

Der Rechner 11 kann eine Position der identifizierten Person 2, 3, 4 ermitteln und den bestimmten Parameterwert der Einrichtung 50 des die ermittelte Position umfassenden Raumbereichs 51, 52, 53 des Hauses 5 einstellen. Idealerweise setzt der Rechner 11 den Parameterwert für die Einrichtung 50 des Raumbereichs 51, 52, 53 zurück, wenn die identifizierte Person 2, 3, 4 den Raumbereich 51, 52, 53 verlässt.

Selbstverständlich kann der RF-Sensor 10 die Mehrzahl von in dem Haus 5 angeordneten Personen 2, 3, 4 gleichzeitig erfassen. Auch kann der Rechner 11 eine Mehrzahl von Personen 2, 3, 4 gleichzeitig identifizieren. Weiterhin kann der Rechner 11 eine Mehrzahl von bestimmten Parameterwerten gleichzeitig automatisch einstellen.

### BEZUGSZEICHENLISTE:

- 1: Smarthome-Plattform
- 10: RF-Sensor
- 100: Sensorsignal
- 11: Rechner
- 2: Person
- 20: Körpergröße
- 21: Personenprofil
- 22: RF-Reflektor
- 3: Person
- 30: Körpergröße
- 31: Personenprofil
- 32: RF-Reflektor
- 4: Person
- 40: Körpergröße
- 41: Personenprofil
- 42: RF-Reflektor
- 5: Haus
- 50: Einrichtung
- 51: Raumbereich
- 52: Raumbereich
- 53: Raumbereich
- 54: Raumbereich
- 55: Haustür

## Patentansprüche

1. Verfahren zum Betreiben einer Smarthome-Plattform (1), bei dem
- ein RF-Sensor (10) einer Smarthome-Plattform (1) eine in einem die Smarthome-Plattform (1) umfassenden Haus (5) angeordnete Person (2, 3, 4) erfasst und ein von der erfassten Person (2, 3, 4) abhängiges Sensorsignal (100) bereitstellt;
- ein mit dem RF-Sensor (10) funktional verbundener Rechner (11) der Smarthome-Plattform (1) das bereitgestellte Sensorsignal (100) empfängt und abhängig von dem empfangenen Sensorsignal (100) die Person (2, 3, 4) identifiziert;
- der Rechner (11) einen bestimmten Parameterwert einer mit dem Rechner funktional verbundenen Einrichtung (50) des Hauses (5) abhängig von der identifizierten Person (2, 3, 4) automatisch einstellt.

2. Verfahren nach Anspruch 1, bei dem der Rechner (11) ein der identifizierten Person (2, 3, 4) zugeordnetes Personenprofil (21, 31, 41) speichert und den Parameterwert mittels des gespeicherten Personenprofils (21, 31, 41) bestimmt.

3. Verfahren nach Anspruch 1 oder 2, bei dem der Rechner (11) eine Raumtemperatur, eine Wassertemperatur und/oder eine Lichtstärke, eine Farbe und/oder eine Farbtemperatur einer Leuchte als den Parameterwert der Einrichtung (50) bestimmt.

4. Verfahren nach einem der Ansprüche 1 bis 3, bei dem der Rechner (11) einen an der Person (2, 3, 4) angebrachten und von dem RF-Sensor (10) erfassbaren RF-Reflektor (22, 32, 42) erfasst und die Person (2, 3, 4) anhand des erfassten RF-Reflektors (22, 32, 42) identifiziert, in das Identifizieren einbezieht oder aus dem Identifizieren ausschließt.

5. Verfahren nach einem der Ansprüche 1 bis 4, bei dem der Rechner (11) abhängig von dem empfangenen Sensorsignal (100) eine Körpergröße (20, 30, 40) der Person (2, 3, 4) ermittelt und die Person (2, 3, 4) anhand der ermittelten Körpergröße (20, 30, 40) identifiziert.

6. Verfahren nach einem der Ansprüche 1 bis 5, bei dem der Rechner (11) abhängig von dem empfangenen Sensorsignal (100) ein Bewegungsmuster der Person (2, 3, 4) ermittelt und die Person (2, 3, 4) anhand des ermittelten Bewegungsmusters identifiziert.

7. Verfahren nach einem der Ansprüche 1 is 6, bei dem der Rechner (11) eine Position der identifizierten Person (2, 3, 4) ermittelt und den bestimmten Parameterwert der Einrichung eines die ermittelte Position umfassenden Raumbereichs (51, 52, 53) des Hauses (5) einstellt.

8. Verfahren nach Anspruch 7, bei dem der Rechner (11) den Parameterwert für die Einrichtung (50) des Raumbereichs (51, 52, 53) zurücksetzt, wenn die identifizierte Person (2, 3, 4) den Raumbereich (51, 52, 53) verlässt.

9. Verfahren nach einem der Ansprüche 1 bis 8, bei dem der RF-Sensor (10) eine Mehrzahl von in dem Haus (5) angeordneten Personen (2, 3, 4) erfasst und/oder der Rechner (11) eine Mehrzahl von Personen (2, 3, 4) identifiziert und/oder der Rechner (11) eine Mehrzahl von bestimmten Parameterwerten automatisch einstellt.

10. Smarthome-Plattform (1) für ein Haus (5), welche einen RF-Sensor (10) und einen mit dem RF-Sensor (10) funktional verbundenen Rechner (11) umfasst und ausgebildet ist, ein Verfahren nach einem der Ansprüche 1 bis 9 auszuführen.
